(19) **Europäisches Patentamt / European Patent Office / Office européen des brevets**

(11) **EP 3 805 334 A1**

(12) # EUROPEAN PATENT APPLICATION
published in accordance with Art. 153(4) EPC

(43) Date of publication:
**14.04.2021 Bulletin 2021/15**

(21) Application number: **19810666.8**

(22) Date of filing: **28.05.2019**

(51) Int Cl.:
**C09J 201/00** (2006.01)  **C09J 7/10** (2018.01)
**C09J 7/20** (2018.01)  **C09J 7/38** (2018.01)
**C09J 11/08** (2006.01)  **C09J 121/00** (2006.01)
**C09J 133/04** (2006.01)

(86) International application number:
**PCT/JP2019/020994**

(87) International publication number:
**WO 2019/230680 (05.12.2019 Gazette 2019/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.05.2018 JP 2018102824**
**27.05.2019 JP 2019098482**

(71) Applicant: **NITTO DENKO CORPORATION**
**Ibaraki-shi**
**Osaka 567-8680 (JP)**

(72) Inventors:
• **TANI, Kensuke**
  **Ibaraki-shi, Osaka 567-8680 (JP)**
• **KIRA, Yoshiko**
  **Ibaraki-shi, Osaka 567-8680 (JP)**
• **MIZUNO, Daisuke**
  **Ibaraki-shi, Osaka 567-8680 (JP)**

(74) Representative: **Müller-Boré & Partner**
**Patentanwälte PartG mbB**
**Friedenheimer Brücke 21**
**80639 München (DE)**

(54) **ADHESIVE AGENT COMPOSITION, ADHESIVE AGENT LAYER, AND ADHESIVE SHEET**

(57)    The present invention relates to an adhesive composition containing a base polymer and a water-absorbing material, wherein Young's modulus when an adhesive layer is formed is 450 kPa or more, an adhesive layer comprising the adhesive composition, and an adhesive sheet including the adhesive layer.

**EP 3 805 334 A1**

**Description**

TECHNICAL FIELD

The present invention relates to an adhesive composition, an adhesive layer comprising the adhesive composition, and an adhesive sheet including the adhesive layer.

BACKGROUND ART

Conventionally, a moisture-curable adhesive and an adhesive sheet using the moisture-curable adhesive are known in adhesive fixation in various fields from that those have both high initial adhesive force and sufficient adhesive force with time.

For example, Patent Literature 1 describes a photopolymerizable composition which can provide a moisture-curable adhesive having sufficient adhesive strength to an adherend having an uneven surface such as an inorganic material, e.g., concrete or the like, or wood by photopolymerization, and a moisture-curable adhesive sheet obtained by using this composition.

CITATION LIST

PATENT LITERATURE

Patent Literature 1: JP-A-2000-273418

SUMMARY OF INVENTION

TECHNICAL PROBLEM

However, in Patent Literature 1, the adhesive strength to an adherend having an uneven surface such as an inorganic material, e.g., concrete or the like, or wood is investigated but the adhesive strength to a wet surface is not investigated at all.

Moreover, in the case where the conventional adhesive is adhered to a wet surface, the conventional adhesive has the problems that dimensional change occurs by swelling and adhesive strength is deteriorated, and the improvement in adhesive force to a wet surface is required.

Accordingly, an object of the present invention is to provide an adhesive composition that can suppress dimensional change by swelling and can form an adhesive layer capable of adhering to a wet surface, an adhesive layer comprising the adhesive composition, and an adhesive sheet including the adhesive layer.

SOLUTION TO PROBLEM

The present inventors have conducted extensive studies for the purpose of providing an adhesive layer and an adhesive sheet that can suppress dimensional change by swelling and can adhere to a wet surface, and as a result, it has been conceived to use an adhesive composition containing a base polymer and a water-absorbing material, that can form an adhesive layer absorbing water on a wet surface. In addition, they have obtained the finding that, in order to suppress dimensional change by swelling and obtain good adhesive force to a wet surface, it is important that Young's modulus when an adhesive layer is formed is set to a specific range.

One aspect of the present invention relates to an adhesive composition containing a base polymer and a water-absorbing material, wherein Young's modulus when an adhesive layer is formed is 450 kPa or more.

In one aspect of the present invention, a water absorption ratio when an adhesive layer is formed may be 2 to 10% by mass.

In one aspect of the present invention, the base polymer preferably contains a rubber-based polymer or an acrylic polymer.

In one aspect of the present invention, the water-absorbing material preferably is a water-absorbing polymer.

In one aspect of the present invention, a content of the water-absorbing material is 1 to 100 parts by mass based on 100 parts by mass of the base polymer.

One aspect of the present invention relates to an adhesive layer comprising the adhesive composition.

One aspect of the present invention relates to an adhesive sheet including the adhesive layer.

In one aspect of the present invention, the adhesive layer may be formed on a substrate.

ADVANTAGEOUS EFFECTS OF INVENTION

According to the present invention, an adhesive composition that can suppress dimensional change by swelling and can adhere to a wet surface, an adhesive layer comprising the adhesive composition, and an adhesive sheet including the adhesive layer can be provided.

BRIEF DESCRIPTION OF DRAWINGS

[FIG. 1] FIG. 1 is one example of a schematic cross-sectional view of an adhesive sheet according to an embodiment of the present invention.
[FIG. 2] FIG. 2 is one example of a schematic cross-sectional view of an adhesive sheet according to an embodiment of the present invention.
[FIG. 3] FIG. 3 is one example of a schematic cross-sectional view of an adhesive sheet according to an embodiment of the present invention.

DESCRIPTION OF EMBODIMENTS

Hereinafter, the embodiments of the present invention will be described in detail. The present invention is not construed as being limited to the embodiments explained below.
An adhesive composition according to an embodiment of the present invention is an adhesive composition containing a base polymer and a water-absorbing material, wherein Young's modulus when an adhesive layer is formed is 450 kPa or more.
The "adhesive sheet" in the present description can include materials called "adhesive tape, "adhesive label", "adhesive film" and the like.
An "adhesive surface" is a surface (pasting surface) in the side which is pasted to an adherend in the adhesive sheet. The adhesive sheet of the present invention is that only one surface may be an adhesive surface and both surfaces may be an adhesive surface.
The adhesive composition of the present embodiment is that Young's modulus of an adhesive layer when the adhesive layer is formed is 450 kPa or more. The Young's modulus is preferably 500 kPa or more, and more preferably 600 kPa or more. When the Young's modulus is 450 kPa or more, the adhesive layer can exhibit good followability to an adherend having an uneven surface. The upper limit of the Young's modulus is not particularly limited, but is preferably 10 MPa or less, more preferably 1000 kPa or less, still more preferably 900 kPa or less, and particularly preferably 800 kPa or less. When the Young's modulus is 10 MPa or less, the adhesive layer can be satisfactorily formed, and has excellent followability to an adherend. Even in the case where the adhesive layer is adhered to a wet surface of an adherend, the adhesive layer can suppress dimensional change by swelling and can be adhered to a wet surface.
The Young's modulus in the present embodiment is a value at 25°C.
The Young's modulus of the adhesive layer when the adhesive layer is formed can be in the above range by adjusting the kind, the compounding ratio, and the like of the base polymer and the water-absorbing material.
The Young's modulus of the adhesive layer when the adhesive layer is formed can be obtained by preparing a sample by forming the adhesive layer into a string shape and calculating from a stress-strain curve measured when pulling in a rate of 50 mm/min using a tensile tester (AG-IS manufactured by Shimadzu Corporation).
The adhesive composition in the present embodiment preferably is that a water absorption ratio when an adhesive layer is formed is 0.5% by mass or more. Moreover, when the water absorption ratio is 10% by mass or less, water is difficult to be accumulated in the adhesive layer. As result, swelling of the adhesive layer by the contact with water or moisture is suppressed, Young's modulus is easily in a specific range, dimensional change is suppressed, and sufficient adhesive force to a wet surface is easy to be obtained. The water absorption ratio is preferably 10% by mass or less, and still more preferably 5% by mass or less. The water absorption ratio is more preferably 1% by mass or more, still more preferably 2% by mass or more, and still further preferably 3% by mass or more. The adhesive composition of the present embodiment is particularly preferably that the water absorption ratio when an adhesive layer is formed is 2 to 10% by mass. When the water absorption ratio is 2% by mass or more, water on the surface of the adherend can be absorbed and removed, and good adhesive force to a wet surface is easy to be obtained.
The water absorption ratio can be calculated from a ratio of mass of the adhesive layer after dipping (storing) in 25°C pure water for 120 hours and mass of the adhesive layer before dipping. For example, the adhesive sheet (adhesive layer) produced is cut into a size of width: 50 mm and length: 50 mm to prepare a sample. The sample is stored in 25°C pure water for 120 hours, and the water absorption ratio can be calculated from mass change by the following expression.

$$\text{Water absorption ratio (\% by mass)} = [(\text{Total mass of sample after storage in water for 120 hours} - \text{total mass of sample before storage in water})/\text{Total mass of sample before storage in water}] \times 100$$

The adhesive layer comprising the adhesive composition in the present embodiment is preferably that dimensional change ratio in a thickness direction after dipping (storing) the adhesive layer in 25°C pure water for 24 hours is 3% or less. When the dimensional change ratio is 3% or less, even in the case where the adhesive layer is pasted to a wet surface of an adherend, deterioration of adhesive force by the swelling of the adhesive layer by the contact with water or moisture is further easy to be prevented or suppressed.

The dimensional change ratio is more preferably 2% or less. Lower dimensional change ratio is preferable, and its lower limit is not particularly limited, but is, for example, 1%.

The dimensional change ratio can be calculated from the thickness of the adhesive layer after dipping and storing in 25°C pure water for 24 hours and the thickness of the adhesive layer before dipping and storing by the following expression. For example, a sample is prepared by lining the adhesive layer with an aluminum foil, a thickness of the adhesive layer before and after storing and dipping in 25°C pure water for 24 hours is measured, and the dimensional change ratio can be measured by the following expression. Moreover, the thickness of the adhesive layer can be measured by the method described in the examples.

$$\text{Dimensional change ratio (\%)} = [(\text{Thickness of adhesive layer after storage in water} - \text{thickness of adhesive layer before storage in water})/(\text{Thickness of adhesive layer before storage in water}) \times 100$$

The base polymer constituting the adhesive composition in the present embodiment is not particularly limited, and the conventional polymers used in an adhesive can be used. Examples of the base polymer include acrylic polymers, rubber-based polymers, vinyl alkyl ether-based polymers, silicone-based polymers, polyester-based polymers, polyamide-based polymers, urethane-based polymers, fluorine-based polymers, epoxy-based polymers, and the like. Among the above-exemplified polymers, acrylic polymers and rubber-based polymers are preferable from the viewpoint of adhesiveness, and rubber-based polymers are more preferable from the viewpoint of hydrophobicity.

By containing hydrophobic polymers, the adhesive layer becomes hydrophobic, and when the adhesive sheet is pasted to a wet surface of an adherend, there is the effect that the adhesive layer repels the water on a wet surface which hinders adhesion between the adhesive sheet and an adherend and excludes the water from the interface between the adherend and the adhesive layer. By this, the water is difficult to be incorporated in the adhesive layer and as a result, the swelling of the adhesive layer is prevented, the dimensional change is suppressed, and good adhesive force to a wet surface becomes easy to be obtained.

In the present embodiment, examples of the rubber-based polymers include isobutylene-based polymers such as polyisobutylene (PIB), copolymers of isobutylene and normal butylene, copolymers of isobutylene and isoprene (e.g., butyl rubbers such as regular butyl rubber, chlorinated butyl rubber, brominated butyl rubber and partially crosslinked butyl rubber), and vulcanized products thereof; styrene-based thermoplastic elastomers such as styrene-ethylene-butylene-styrene block copolymer (SEBS), styrene-isoprene-styrene block copolymer (SIS), isoprene rubber (IR), styrene-butadiene-styrene block copolymer (SBS), styrene-ethylene-propylene-styrene block copolymer (SESP, a hydrogenated product of SIS), styrene-ethylene-propylene block copolymer (SEP, a hydrogenated product of styrene-isoprene copolymer), styrene-isobutylene-styrene block copolymer (SIBS), styrene-butadiene rubber (SBR) and other styrene-based block copolymers; synthetic butyl rubber (IIR), reclaimed butyl rubber, butadiene rubber (BR), acrylonitrile-butadiene rubber (NBR), EPR (binary ethylene-propylene rubber), EPT (ternary ethylene-propylene rubber), acrylic rubber, urethane rubber, silicone rubber, and the like. Among them, reclaimed butyl rubber, PIB, IIR, IR, SIS and SIBS are preferable and reclaimed butyl rubber is more preferable, from the viewpoint of low water absorption ratio. Those may be used in one kind alone or by combining two or more kinds.

Moreover, for example, low-polar polymers, e.g., aliphatic hydrocarbon resins such as 1,3-pentadiene-based polymer and polybutene, alicyclic hydrocarbon resins such as dicyclopentadiene, petroleum-based softeners (paraffin-based oils, naphthene-based oils or aromatic oils), and the like may be used as a polymer for a rubber modifier.

In the present embodiment, the acrylic polymer is a polymer comprising (meth)acrylic ester as a main monomer component, and the acrylic polymer containing (meth)acrylic alkyl ester ((meth)acrylic alkyl ester having straight chain or branched chain alkyl group) as a main monomer component can be preferably used. Examples of the (meth)acrylic alkyl ester include acrylic acid alkyl esters having 1 to 20 carbon atoms such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, and the like. Among them, (meth)acrylic acid alkyl esters having an alkyl group having 1 to 14 carbon atoms are preferable, and (meth)acrylic acid alkyl esters having an alkyl group having 2 to 10 carbon atoms are more preferable. The "(meth)acrylic ester" means "acrylic ester" and/or "methacrylic ester" and others are the same.

Examples of (meth)acrylic ester other than the above-mentioned (meth)acrylic alkyl ester include (meth)acrylic esters having an alicyclic hydrocarbon group such as cyclopentyl (meth)acrylate, cyclohexyl (meth)acrylate and isobornyl (meth)acrylate, and (meth)acrylic esters having an aromatic hydrocarbon group such as phenyl (meth)acrylate, and the like.

The (meth)acrylic esters can be used alone or by combining two or more kinds. Moreover, the monomer other than an acrylic monomer may be copolymerized with the (meth)acrylic ester.

In the present embodiment, the content of (meth)acrylic alkyl ester in the monomer component constituting the acrylic polymer is preferably 80% by mass or more, more preferably 90% by mass or more, and still more preferably 100% by mass.

Examples of the polar group-containing monomer include a carboxyl group-containing monomer such as (meth)acrylic acid, itaconic acid, maleic acid, fumaric acid, crotonic acid or isocrotonic acid, or its anhydride (maleic anhydride or the like); a hydroxyl group-containing monomer, e.g., hydroxyalkyl (meth)acrylate such as hydroxyethyl (meth)acrylate, hydroxypropyl (meth)acrylate or hydroxybutyl (meth)acrylate; an amide group-containing monomer such as acrylamide, methacrylamide, N,N-dimethyl (meth)acrylamide, N-methylol (meth)acrylamide, N-methoxymethyl (meth)acrylamide or N-butoxymethyl (meth)acrylamide; an amino group-containing monomer such as aminoethyl (meth)acrylate, dimethylaminoethyl (meth)acrylate or t-butylaminoethyl (meth)acrylate; a glycidyl group-containing monomer such as glycidyl (meth)acrylate or methylgycidyl (meth)acrylate; a cyano group-containing monomer such as acrylonitrile or methacrylonitrile; a heterocycle-containing vinyl monomer such as N-vinyl-2-pyrrolidone, (meth)acryloyl morpholine, N-vinyl pyridine, N-vinyl piperidone, N-vinyl pyrimidine, N-vinyl piperazine, N-vinyl pyrrole, N-vinyl imidazole or N-vinyl oxazole; an alkoxyalkyl (meth)acrylate monomer such as methoxyethyl (meth)acrylate or ethoxyethyl (meth)acrylate; a sulfate group-containing monomer such as sodium vinyl sulfonate; a phosphate group-containing monomer such as 2-hydroxyethylacryloyl phosphate; an imide group-containing monomer such as cyclohexyl maleimide or isopropyl maleimide; and an isocyanate group-containing monomer such as 2-methacryloyloxyethyl isocyanate.

Examples of the polyfunctional monomer mentioned above include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate and urethane acrylate.

The content of the base polymer in the adhesive composition according to the present embodiment is not particularly limited, but from the viewpoint of initial adhesive force, the content of the base polymer is preferably 5% by mass or more, more preferably 10% by mass or more, and still more preferably 20% by mass or more, based on all the components of the adhesive composition excluding a solvent, that is, when the total amount of the components of the adhesive composition excluding the solvent is 100% by mass. Moreover, the content of the base polymer is preferably 90% by mass or less, more preferably 80% by mass or less, and still more preferably 70% by mass or less, based on all the components of the adhesive composition excluding a solvent.

The adhesive composition in the present embodiment contains a water-absorbing material. Here, the water-absorbing material refers to a material capable of absorbing and retaining water. When the adhesive composition contains the water-absorbing material, at the time when the adhesive sheet is pasted to the wet surface of the adherend, the water-absorbing material absorbs and retains the water on the wet surface, which interferes with the adhesion between the adhesive sheet and the adherend, and thereby the initial adhesive force to the adherend of the adhesive sheet is well exhibited. In addition, since the water on the wet surface of the adherend is absorbed and removed by the water-absorbing material, the adhesive sheet can well follow even to an adherend having an uneven surface. As a result, the adhesiveness to the wet surface is more easily improved.

As the water-absorbing material, an organic water-absorbing material such as a water-absorbing polymer or an inorganic water-absorbing material can be used. Among them, a water-absorbing polymer is preferably used. The water-absorbing material may be used in one kind alone or may be used by combining two or more kinds.

Examples of the water-absorbing polymer include polyacrylic acids, water-soluble celluloses, polyvinyl alcohols, polyethylene oxides, starches, alginic acids, chitins, polysulfonic acids, polyhydroxymethacrylates, polyvinylpyrrolidones, polyacrylamides, polyethyleneimines, polyallylamines, polyvinylamines, maleic anhydride-modified polymer, copolymers of monomers constituting those, and the like. The water-absorbing polymer may be used in one kind alone or may be used by combining two or more kinds.

Among them, a polyacrylic acid sodium salt or a copolymer of maleic anhydride and polyisobutylene is preferable, and a copolymer of maleic anhydride and polyisobutylene is more preferable.

A commercially available product may be used as the water-absorbing polymer. As commercially available products of the water-absorbing polymers, there can be suitably used, for example, KC Flock (cellulose powder, manufactured by Nippon Paper Chemicals, Co., Ltd.), Sunrose (carboxymethyl cellulose, manufactured by Nippon Paper Chemicals, Co., Ltd.), Aqualic CA (acrylic acid polymer partial sodium salt crosslinked product, manufactured by Nippon Shokubai Co., Ltd.), Acryhope (acrylic acid polymer partial sodium salt crosslinked product, manufactured by Nippon Shokubai Co., Ltd.), Sunwet (polyacrylate salt crosslinked product, manufactured by San-Dia Polymers, Ltd.), Aqua Pearl (polyacrylate salt crosslinked product, manufactured by San-Dia Polymers, Ltd.), Aqua Keep (acrylic acid polymer partial sodium salt crosslinked product, manufactured by Sumitomo Seika Chemicals Co., Ltd.), Aquacalk (modified polyalkylene oxide, manufactured by Sumitomo Seika Chemicals Co., Ltd.), KI gel (isobutylene-maleic anhydride copolymer crosslinked product, manufactured by Kuraray Co., Ltd.), and the like.

Examples of the inorganic water-absorbing material include silica gel, inorganic polymers such as Sumecton SA manufactured by Kunimine Industries Co., Ltd., and the like.

In the adhesive composition in the present embodiment, the content of the water-absorbing material is not particularly limited, but in order to enhance Young's modulus and further improve adhesive force to a wet surface, the content is preferably 1 part by mass or more, more preferably 20 parts by mass or more, still more preferably 30 part by mass or more, and particularly preferably 50 parts by mass or more, based on 100 parts by mass of the base polymer of the adhesive composition. In addition, from the viewpoint of the suppression of dimensional change by swelling, the content is more preferably 200 parts by mass or less, more preferably 150 parts by mass or less, and particularly preferably 100 parts by mass or less.

The adhesive composition according to the present embodiment may contain a tackifier (tackifying agent) for the purpose of adjusting Young's modulus and imparting tackiness at the time of initial adhesion. Examples of the tackifier include polybutenes, rosin-based resins, terpene-based resins, petroleum-based resins (e.g., petroleum-based aliphatic hydrocarbon resins, petroleum-based aromatic hydrocarbon resins, and petroleum-based aliphatic/aromatic copolymerized hydrocarbon resins, petroleum-based alicyclic hydrocarbon resins (hydrogenated ones of aromatic hydrocarbon resins), such as asphalt, etc.), coumarone-based resins, and the like. In view of compatibility with the base polymer, the tackifier is preferably petroleum-based resins and rosin-based resins. The tackifier may be used in one kind or by combining two or more kinds.

The content of the tackifier when the tackifier is contained in the adhesive composition is, from the viewpoint of decreasing Young's modulus, preferably 10 parts by mass or more, more preferably 15 parts by mass or more, and still more preferably 20 parts by mass or more, based on 100 parts by mass of the base polymer. In addition, the content of the tackifier is, from the viewpoint of imparting an appropriate cohesive force to the adhesive, preferably 200 parts by mass or less, more preferably 100 parts by mass or less, and still more preferably 50 parts by mass or less, based on 100 parts by weight of the base polymer.

To the adhesive composition of the present embodiment, additives usually added to an adhesive composition, such as viscosity modifiers, release modifiers, plasticizers, softeners, fillers, colorants (pigment, dye, etc.), antiaging agents, surfactants, leveling agents, antifoaming agents, light stabilizers, and the like may be further added to the extent that the advantageous effects of the present invention are not inhibited.

Examples of the filler include inorganic fillers such as talc, titanium oxide, calcium oxide, magnesium oxide, zinc oxide, titanium oxide, calcium carbonate, carbon, silica, clay, mica, barium sulfate, whiskers, magnesium hydroxide, and the like.

The content of the filler is not particularly limited so long as it is a range capable of making the Young's modulus in a specific range. However, from the viewpoint of adhesiveness to a rough surface, the content is preferably 750 parts by mass or less, more preferably 600 parts by mass or less, and still more preferably 550 parts by mass or less, based on 100 parts by mass of the base polymer. In addition, from the viewpoints of processing stability of the adhesive sheet and suppression of deformation during storage of the adhesive, the content is preferably 50 parts by mass or more and more preferably 150 parts by mass or more.

Moreover, various common solvents can be used as a solvent to be utilized for an adhesive composition. Examples of the solvents include organic solvents, e.g., esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; ketones such as methyl ethyl ketone and methyl isobutyl ketone, and the like. The solvents may be used alone or by combining two or more kinds.

The adhesive layer of the present embodiment is formed using the above-mentioned adhesive composition. The formation method thereof is not particularly limited, and a known method can be adopted. However, the formation method can be conducted according to the following production method of the adhesive sheet. The preferable range of each component amount based on 100 parts by mass of the base polymer in the adhesive layer is the same as the preferable range of each component amount based on 100 parts by mass of the base polymer in the adhesive composition.

The adhesive layer in the present embodiment is formed using the above-mentioned adhesive composition. The formation method thereof is not particularly limited, and a known method can be adopted. For example, the adhesive layer can be obtained in the form of an adhesive sheet by applying the adhesive composition to a substrate mentioned later using a known coating method and drying the composition. Moreover, after the adhesive composition is applied to a surface having releasability and dried or cured to thereby form an adhesive layer on the surface, the adhesive layer may be pasted to a non-releasable substrate and then transferred thereto. The method for applying the adhesive composition to the substrate is not particularly limited, and the application can be performed using, for example, a gravure roll coater, a reverse roll coater, a kiss roll coater, a dip roll coater, a bar coater, a knife coater, a spray coater, a fountain die coater, a closed edge die coater, or the like.

The adhesive layer may be formed by applying the adhesive composition to a release sheet (may be a sheet-like substrate having a release surface).

The thickness of the adhesive layer after drying is not particularly limited, but is preferably 5 to 1000 $\mu$m and more preferably 10 to 500 $\mu$m, from the viewpoint of exhibiting good followability to an adherend having an uneven surface. The drying temperature can be, for example, 50 to 150°C.

The adhesive layer may be formed using a non-solvent coating method such as rolling or extrusion. In this case, the adhesive composition is heated and kneaded, and the adhesive composition can be obtained as a kneaded product. For example, a batch-type kneading machine such as a kneader, Banbury mixer or a mixing roll, a continuous kneading machine such as a twin-screw kneading machine, and the like are used for kneading. The heating temperature during kneading can be, for example, 80 to 180°C.

The adhesive layer 12 can be formed into a sheet shape by heating the adhesive composition obtained above with a molding machine such as an extruder, a calender roll or a press machine (heat press machine).

An adhesive sheet of the present embodiment has the adhesive layer mentioned above.

The adhesive sheet of the present embodiment may be an adhesive sheet with a substrate in a form having the adhesive layer on one side or both sides of a sheet-like substrate (support), or may be a substrate-less adhesive sheet in a form where the adhesive layer is held by a release sheet. The concept of the adhesive sheet as referred to herein can include those called as an adhesive tape, an adhesive label, an adhesive film, and the like.

Incidentally, the adhesive layer is typically formed continuously, but is not limited to such a form, and may be, for example, an adhesive layer formed in a regular or random pattern, such as dot-like or stripe-like pattern. The adhesive sheet of the present embodiment may be a roll shape and may be a leaf shape. Alternatively, the adhesive sheet may be an adhesive sheet in the form further processed into various shapes.

Examples of the material that forms the substrate include polyolefin-based films of polyethylene, polypropylene, and ethylene/propylene copolymer and the like; polyester-based films of polyethylene terephthalate and the like; plastic films of polyvinyl chloride and the like; and papers such as kraft paper and Japanese paper; cloths such as cotton cloth and Sufu (staple fiber) cloth; nonwoven fabrics such as polyester nonwoven fabric and vinylon nonwoven fabric; and metal foils. The thickness of the substrate is not particularly limited.

The plastic films may be unstretched films and may be stretched (uniaxially stretched or biaxially stretched) films. In addition, the surface of the substrate on which the adhesive layer is provided may be subjected to a surface treatment such as application of a primer, corona discharge treatment, or the like.

In the present embodiment, the adhesive sheet may be perforated to provide a through hole. In this way, when the adhesive sheet is attached to an adherend, water on the wet surface of the adherend can be released to the back side (opposite to the pasted surface) of the adhesive sheet through the through hole, so that more water on the wet surface of the adherend can be removed.

In the adhesive sheet of the present embodiment, the adhesive layer may be protected with a release liner (separator, release film) until the time of use.

As the release liner, the conventional release paper or the like can be used, and it is not particularly limited. For example, a substrate having a release-treated layer, a low adhesive substrate composed of a fluorine-based polymer, a low adhesive substrate composed of a nonpolar polymer, or the like can be used.

Examples of the substrate having a release-treated layer include plastic films, paper, and the like which have been surface-treated with a release treatment agent such as silicone-based one, long chain alkyl-based one, fluorine-based one, or molybdenum sulfide.

Examples of the fluorine-based polymer of the low adhesive substrate composed of a fluorine-based polymer include polytetrafluoroethylene, polychlorotrifluoroethylene, polyvinyl fluoride, polyvinylidene fluoride, tetrafluoroethylene-hexafluoropropylene copolymer, and chlorofluoroethylene-vinylidene fluoride copolymer, and the like.

Examples of the nonpolar polymer of the low-adhesive substrate composed of a nonpolar polymer include olefin-based resins (e.g., polyethylene, polypropylene, etc.), and the like. Incidentally, the release liner can be formed by a known or conventional method. In addition, the thickness and the like of the release liner are not particularly limited.

With regard to the adhesive composition, the adhesive layer, and the adhesive sheet (adhesive composition and the like) of the present embodiment, it is preferable to reduce or block the influence of surrounding water (water and moisture). For example, the adhesive sheet of the present embodiment may be packaged with a suitable package. Example of the material of the package includes an aluminum-made moisture-proof bag, but the material is not limited thereto. Further, the atmosphere inside the package may be the air, but may be replaced by an inert gas such as nitrogen or argon. In addition, a desiccant such as silica gel may be also packaged inside the package.

An adherend to which the adhesive sheet of the present embodiment is to be pasted is not particularly limited. Examples of the adherend include concrete, mortar, asphalt, metal, wood, tiles, plastic materials (for example, building exterior materials and interior materials such as a painted surface or an inner wall of a bathroom, underwater and water surface structures such as ship or buoy, aquarium, bathtub and sports equipment), cloths such as woven fabric or nonwoven fabric, papers, porous bodies such as an electrolyte membrane, a separation membrane or a filter, and the like. Moreover, the adherend may be a living body, and may be the outside of a living body (for example, skin, shell or scale), and the inside of a living body (for example, teeth or bone).

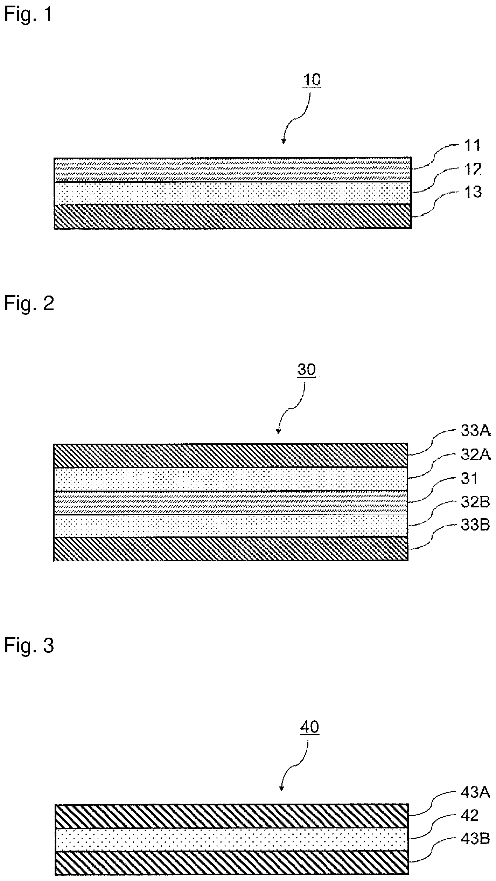

FIG. 1 is one example of a schematic cross-sectional view of the adhesive sheet according to the embodiment of the present invention.

An adhesive sheet 10 of the present embodiment includes a substrate 11 and an adhesive layer 12, and the surface in the opposite side of the substrate 11 of the adhesive layer 12 is peelably covered with a release liner 13.

The adhesive sheet 10 of the present embodiment is used by peeling and removing the release liner 13 and pasting to an adherend through the adhesive layer 12. In other words, in the adhesive layer 12 in the present embodiment, the surface in the release liner 13 side is an adhesive surface.

A layer which forms the adhesive sheet 10 of the present embodiment is hereinafter described in detail.

The adhesive layer 12 in the present embodiment comprises an adhesive composition containing a base polymer and a water-absorbing material.

When the adhesive sheet 10 of the present embodiment is pasted to a wet surface of an adherend, the adhesive layer absorbs water present on the surface of a wet surface of an adherend, thereby removing the water. As a result, the adhesive sheet can adhere to the wet surface.

The adhesive sheet according to the embodiment of the present invention includes a substrate having the adhesive layers provided on both surfaces thereof as shown in FIG. 2, and the adhesive layers may be protected by a release liner.

An adhesive sheet 30 of the present embodiment includes a first release liner 33A, a first adhesive layer 32A, a substrate 31, a second adhesive layer 32B and a second release liner 33B, in this order.

The adhesive sheet 30 of the present embodiment is used by peeling and removing the first release liner 33A and the second release liner 33 B and pasting the first adhesive layer 32A and the second adhesive layer 32B to the respective different adherends. In other words, in the present embodiment, both the surface in the first release liner 33A side of the first adhesive layer 32A and the surface in the second release liner 33B side of the second adhesive layer 32B are adhesive surfaces.

The substrate 31, the first and second adhesive layers 32A and 32B, and the first and second release liners 33A and 33B in the present embodiment are the same as the above-mentioned substrate 11, adhesive layer 12 and release liner 13.

Moreover, the adhesive sheet 30 in the present embodiment may be wound. In other words, the adhesive sheet 30 of the present embodiment does not include, for example, the second release liner 33B, and may be wound such that the adhesive surface of the second adhesive layer 32B is pasted to the surface opposite the first adhesive layer 32A of the first release liner 33A.

As shown in FIG.3, the adhesive sheet according to the present embodiment does not include a substrate, and both surfaces of the adhesive layer may be protected by a release liner.

In other words, an adhesive sheet 40 of the present embodiment may include a first release liner 43A, an adhesive layer 42 and a second release liner 43B, in this order.

The adhesive sheet 40 of the present embodiment is used by peeling and removing the first release liner 43A and the second release liner 43 B and pasting one surface and another surface of the adhesive layer 42 to the respective different adherends. In other words, in the present embodiment, the surface in the first release liner 43A side of the adhesive layer 42 and the surface in the second release liner 43B side of the adhesive layer 42 each are the adhesive surface.

EXAMPLES

The present invention will be specifically described below by reference to Examples, but the present invention should not be construed as being limited to these examples.

(Production of adhesive composition)

(Example 1)

A petroleum-based resin (T-Rez RB100 manufactured by JXTG Energy Corporation): 100 parts by mass as a tackifier, heavy calcium carbonate (manufactured by Maruo Calcium Co., Ltd.): 200 parts by mass as a filler and an isobutylene-maleic anhydride copolymer (KI gel manufactured by Kuraray Trading Co., Ltd.): 50 parts by mass as a water-absorbing material were blended with 100 parts by mass of reclaimed butyl rubber (product name S-Butyl Reclaimed Rubber manufactured by Agata Rubber Industry Co., Ltd.) as a base polymer. Thus, an adhesive composition of Example 1 was produced.

(Example 2)

An adhesive composition of Example 2 was produced in the same manner as Example 1, except that the amount used of the heavy calcium carbonate as the filler in Example was changed to 300 parts by mass.

(Example 3)

An adhesive composition of Example 3 was produced in the same manner as Example 2, except that the amount used of the isobutylene-maleic anhydride copolymer (KI gel manufactured by Kuraray Trading Co., Ltd.) as the water-absorbing material in Example 2 was changed to 20 parts by mass.

(Example 4)

An adhesive composition of Example 4 was produced in the same manner as Example 1, except that in addition to 100 parts by mass of a petroleum-based resin (T-Rez RB100 manufactured by JXTG Energy Corporation) as the tackifier in Example 1, 10 parts by mass of modified asphalt (TRUNBLE BASE ASPHALT 4402 manufactured by OWEN CORNING) were further used, and the amount used of the heavy calcium carbonate (manufactured by Maruo Calcium Co., Ltd.) as the filler was changed to 500 parts by mass.

(Example 5)

An adhesive composition of Example 5 was produced in the same manner as Example 4, except that the amount used of the modified asphalt as the tackifier in Example 1 was changed to 30 parts by mass.

(Example 6)

An adhesive composition of Example 6 was produced in the same manner as Example 1, except that the amount used of the heavy calcium carbonate (manufactured by Maruo Calcium Co., Ltd.) as the filler in Example 1 was changed to 500 parts by mass.

(Example 7)

An adhesive composition of Example 7 was produced in the same manner as Example 6, except that the amount used of the isobutylene-maleic anhydride copolymer ((KI gel manufactured by Kuraray Trading Co., Ltd.) as the water-absorbing material as the filler in Example 6 was changed to 100 parts by mass.

(Comparative Example 1)

Reclaimed butyl rubber (product name S-Butyl Reclaimed Rubber manufactured by Agata Rubber Industry Co., Ltd.): 50 parts by mass and liquid polybutene (HV-300 manufactured by JXTG Energy Corporation): 50 parts by mass as base polymers were dissolved in toluene as a solvent, and 100 parts by mass of a petroleum resin (T-Rez RB100 manufactured by JXTG Energy Corporation) as a tackifier and 100 parts by mass of heavy calcium carbonate (manufactured by Maruo Calcium Co., Ltd.) as a filler were then added to the solution obtained above. Thus, an adhesive composition of Comparative Example 1 was produced.

(Comparative Example 2)

An adhesive composition of Comparative Example 2 was produced in the same manner as in Comparative Example 1, except that 5 parts by mass of an isobutylene-maleic anhydride copolymer ((KI gel manufactured by Kuraray Trading Co., Ltd.) as a water-absorbing material were further added.

(Production of adhesive sheet)

Each material shown in Table 1 was placed in a labo kneader mill (TD300-3 Model manufactured by Toshin Co., Ltd.), heated to 140°C and then kneaded under the condition of a screw speed of 40 rpm for 30 minutes. Thus, an admixture of an adhesive was produced.
Using a PET release liner (MFR 38 (manufactured by Mitsubishi Chemicals, Inc.), the adhesive admixture was placed on a release-treated surface thereof, and a PET release liner (MFR 38 (manufactured by Mitsubishi Chemicals, Inc.) was placed on the adhesive admixture.
Thereafter, hot pressing was conducted under the conditions of 100°C and 0.5 MPa, thereby producing an adhesive sheet having a thickness of 1000 $\mu$m of the adhesive layer.
Thereafter, the adhesive sheet was pasted to an aluminum substrate (manufactured by Toyo Aluminum K.K.), and an adhesive sheet having the aluminum substrate, the adhesive layer and the PET release liner laminated in this order was produced.

(Measurement of a water absorption ratio)

An adhesive sheet (adhesive layer) produced in the same manner as above was cut into a size of width: 50 mm and length of 50 mm, and this was used as a sample. The sample produced was stored in 25°C pure water for 120 hours, and the water absorption ratio was calculated from mass change.

$$\text{Water absorption ratio (\% by mass)} = [(\text{Total mass of sample after storage in water}$$
$$\text{for 120 hours} - \text{total mass of sample before storage in water})/\text{Total mass of sample before}$$
$$\text{storage in water}] \times 100$$

Depending on the value obtained, the water absorption ratio of the adhesive layer was judged by the following criteria.

(Evaluation criteria of the water absorption ratio)

Lower than 2% by mass or greater than 10% by mass: $\times$ (Poor)
Greater than 5% by mass to 10% by mass: $\triangle$ (Slightly poor)
2% by mass to 5% by mass: $\bigcirc$ (Good)

(Measurement of Young's modulus)

An adhesive layer was round into a string to prepare a sample (cross-section: 3 mm$^2$). The sample was subjected to a tensile test under the conditions of temperature: 25°C, tensile rate: 50 mm/min, chuck distance: 10 mm and road cell: 50 N using a tensile tester (AG-IS manufactured by Shimadzu Corporation). Tensile strength (N) and average elongation (%) just before breakage were read from stress-strain (S-S) waveform (measurement chart), and Young's modulus (kPa) was calculated from the S-S waveform. In the sample that swells, although the cross-section varies, it was evaluated as apparent Young's modulus.

(Measurement of shear adhesive force)

A slate plate having a size of thickness: 3 mm, width: 30 mm and length: 125 mm was prepared from a slate standard plate, product name "JIS A5430 (FB)" (hereinafter referred to as a slate plate) manufactured by Nippon Testpanel Co., Ltd. A glossy surface of the slate plate was used. The slate plate was dried at 130°C for 1 hour, and the mass of the slate plate at this time was measured, and the mass was defined as "mass of slate plate before dipping in water".

Subsequently, the slate plate prepared was deaerated for one hour in the state of dipping in water by an ultrasonic deaerator (BRANSON 3510 manufactured by Yamato Scientific Co., Ltd.), allowed to stand for 24 hours, and then taken out of the water. Water on the slate plate was wiped off, the mass of the slate plate at this time was measured, and the mass was defined as "mass of slate plate after dipping and deaerating in water".

Based on the "mass of slate plate before dipping in water" and "mass of slate plate after dipping and deaerating in water" measured, a water absorption ratio of the slate plate was calculated by the following expression. As a result, the water absorption ratio was 25% (% by mass).

$$\text{Water absorption ratio (\% by mass) of slate plate} = [\{(\text{Mass of slate plate after dipping and deaerating in water}) - (\text{mass of slate plate before dipping in water})\}/ (\text{Mass of slate plate before dipping in water})] \times 100$$

The adhesive sheet prepared in the same manner as above was cut so as to have a size of width: 20 mm and length: 10 cm, and the release liner was peeled and removed.

Subsequently, the adhesive sheet produced in each example was press-bonded and pasted to the surface (wet surface) of the slate plate from which water had been wiped off by one reciprocation with 2 kg roller. Each slate was covered with a wrap one by one in order to prevent drying of the slate, and the entire surface of each slate was further covered with an aluminum foil and then allowed to stand for 24hours. Thereafter, the slate plate having the adhesive sheet (test piece) pasted thereto was taken out, and shear adhesive force (N/20 mm) at a peel temperature of 23°C to the slate plate (adhesiveness, to wet slate (2 kg roller press-bonding)) was measured using a tensile tester (AD4932A manufactured by A&D Company, Limited).

Depending on the value of the shear adhesive force obtained, the adhesiveness of the adhesive layer was judged by the following criteria.

(Adhesiveness: evaluation standard to a wet slate ((2 kg roller press-bonding))

Less than 1 N/20 mm: × (Poor)
1 N/20 mm or more: ○ (Good)

The state of a peeled surface of the adhesive layer was visually observed and evaluated. The state that adhesive layer could be peeled in the interface between the adhesive layer and the slate plate and roughness of the peeled surface was not observed or the adhesive did not remain on an adherend was designated as "interface peeling", and the state that the adhesive layer was destroyed and roughness was formed on the peeled surface or the adhesive remained on an adherend was designated as "cohesive failure".

The adhesive sheet prepared in the same manner as above was cut so as to have a size of width: 20 mm and length: 10 cm, and the release liner was peeled and removed.

Subsequently, shear adhesive force (N/20 mm) at a peel temperature of 23°C to the slate plate (adhesiveness, to a wet slate (1 MPa press-bonding)) was measured in the same manner as above, except that the adhesive sheet (test piece) produced in each example was press-bonded to the surface (wet surface) of the slate plate from which water was wiped off under a load of 1 MPa using a small-sized vacuum heating press manufactured by Imoto Machinery Co., Ltd., and depending on the value of shear adhesive force obtained, the adhesiveness of the adhesive layer was judged by the following criteria.

In addition, the state of the peeled surface of the adhesive layer was visually observed in the same manner as above.

(Adhesiveness, evaluation criteria to a wet slate (1 MPa press-bonding))

Less than 5 N/20 mm: × (Poor)
5 N/20 mm or more: ○ (Good)

(Measurement of dimensional change ratio)

The adhesive sheet obtained in the same manner as above was cut into 2 cm square to prepare a sample, and the sample was stored in 25°C pure water for 24 hours. The thickness of the adhesive layer before and after storage in water was measured using Dial Gauge R1-205 manufactured by Ozaki Mfg. Co., Ltd, and the dimensional change ratio was calculated by the following expression.

$$\text{Dimensional change ratio (\%)} = [(\text{Thickness of adhesive layer after storage in water}$$

$$- \text{thickness of adhesive layer before storage in water})/\text{Thickness of adhesive layer before}$$

$$\text{storage in water}] \times 100$$

[Table 1]

TABLE 1

|  |  | Example 1 | Example 2 | Example 3 | Example 4 | Example 5 | Example 6 | Example 7 | Comparative Example 1 | Comparative Example 2 |
|---|---|---|---|---|---|---|---|---|---|---|
| Base polymer | Butyl rubber, reclaimed butyl rubber | 100 | 100 | 100 | 100 | 100 | 100 | 100 | 50 | 50 |
|  | Liquid (isoprene) Rubber, HV300 | 0 | 0 | 0 | 0 | 0 | 0 | 0 | 50 | 50 |
| Tackifier | T-REZ RB100 | 100 | 100 | 100 | 100 | 100 | 100 | 100 | 100 | 100 |
|  | Modified asphalt | 0 | 0 | 0 | 10 | 30 | 0 | 0 | 0 | 0 |
| Filler | Heavy Ca carbonate | 200 | 300 | 300 | 500 | 500 | 500 | 500 | 100 | 100 |
| Water-absorbing material | KI gel | 50 | 50 | 20 | 50 | 50 | 50 | 100 | 0 | 5 |
| Adhesiveness: to a wet slate (N/ 20 mm) (2 kg roller press-bonding) |  | ○ 2.07 Interface peeling | ○ 2.14 Interface peeling | ○ 2.63 Interface peeling | ○ 1.89 Interface peeling | ○ 2.13 Interface peeling | × 0.26 Interface peeling | ○ 1.13 Interface peeling | × 0.16 Interface peeling | × 0.25 Interface peeling |
| Adhesiveness: to a wet slate (N/ 20 mm) (1 MPa press-bonding) |  | ○ 11.6 Cohesive failure | ○ 13.1 Cohesive failure | ○ 12.3 Cohesive failure | ○ 14.5 Cohesive failure | ○ 12.1 Cohesive failure | ○ 18.6 Cohesive failure | ○ 9.1 Cohesive failure | × 0.76 Interface peeling | ○ 5.6 Interface peeling |
| Water absorption ratio (% by mass) |  | Δ 6.8 | ○ 4.7 | ○ 4.9 | ○ 4.1 | ○ 4.5 | ○ 3.4 | × 13.1 | × 1.2 | × 1.9 |
| Dimensional change ratio (%) |  | 2.1 | 1.2 | 2.1 | 2.1 | 1.9 | 0.9 | 8.9 | 0 | 0.41 |
| Young's modulus (kPa) |  | 462 | 813 | 714 | 856 | 784 | 1034 | 1121 | 65.2 | 75.6 |

13

As shown in Table 1, it is understood that the adhesive compositions and adhesive sheets of Examples 1 to 7 in which the Young's modulus when the adhesive layer is formed is within the requirement of the present invention suppress dimensional change by swelling and can well adhere to a wet surface.

Although the present invention has been described by reference to the preferred embodiments, the present invention is not limited to the embodiments described above and various modifications and replacements can be added to the embodiments described above without departing from the scope of the present invention.

This application is based on Japanese Patent Application No. 2018-102824 filed May 29, 2018, and Japanese Patent Application No. 2019-098482 filed May 27, 2019, the disclosures of which are incorporated herein by reference.

REFERENCE SIGNS LIST

| | |
|---|---|
| 10, 30, 40: | Adhesive sheet |
| 11, 31: | Substrate |
| 12, 42: | Adhesive layer |
| 13: | Release liner |
| 32A: | First adhesive layer |
| 32B: | Second adhesive layer |
| 33A, 43A: | First release liner |
| 33B, 43B: | Second release liner |

**Claims**

1. An adhesive composition containing a base polymer and a water-absorbing material,
   wherein Young's modulus when an adhesive layer is formed is 450 kPa or more.

2. The adhesive composition according to claim 1, wherein a water absorption ratio when an adhesive layer is formed is 2 to 10% by mass.

3. The adhesive composition according to claim 1 or 2, wherein the base polymer contains a rubber-based polymer or an acrylic polymer.

4. The adhesive composition according to any one of claims 1 to 3, wherein the water-absorbing material is a water-absorbing polymer.

5. The adhesive composition according to any one of claims 1 to 4, wherein a content of the water-absorbing material is 1 to 100 parts by mass based on 100 parts by mass of the base polymer.

6. An adhesive layer comprising the adhesive composition according to any one of claims 1 to 5.

7. An adhesive sheet comprising the adhesive layer according to claim 6.

8. The adhesive sheet according to claim 7, wherein the adhesive layer is formed on a substrate.

Fig. 1

Fig. 2

Fig. 3

## INTERNATIONAL SEARCH REPORT

| | International application No. |
|---|---|
| | PCT/JP2019/020994 |

A.  CLASSIFICATION OF SUBJECT MATTER
Int.Cl. C09J201/00(2006.01)i, C09J7/10(2018.01)i, C09J7/20(2018.01)i,
C09J7/38(2018.01)i, C09J11/08(2006.01)i, C09J121/00(2006.01)i,
C09J133/04(2006.01)i
According to International Patent Classification (IPC) or to both national classification and IPC

B.  FIELDS SEARCHED

Minimum documentation searched (classification system followed by classification symbols)
Int.Cl. C09J201/00, C09J7/10, C09J7/20, C09J7/38, C09J11/08, C09J121/00,
C09J133/04

Documentation searched other than minimum documentation to the extent that such documents are included in the fields searched
Published examined utility model applications of Japan      1922-1996
Published unexamined utility model applications of Japan    1971-2019
Registered utility model specifications of Japan            1996-2019
Published registered utility model applications of Japan    1994-2019

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 62-43474 A (SUMIKUROSU KOGYO KK) 25 February 1987, claims, page 1, right column, last paragraph to page 2, upper left column, third paragraph, tables 1, 2<br>(Family: none) | 1-8<br>1-8 |
| X<br>Y | JP 2014-500355 A (3M INNOVATIVE PROPERTIES COMPANY) 09 January 2014, claims 1, 15, paragraphs [0065], [0070], [0079]-[0085]<br>& US 2012/0122359 A1, claims, paragraphs [0058], [0074]-[0078] & WO 2012/067902 A1 & EP 2640793 A1 & CN 103201353 A & KR 10-2013-0119941 A | 1-8<br>1-8 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23.07.2019 | 06.08.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2019/020994

C (Continuation).    DOCUMENTS CONSIDERED TO BE RELEVANT

| Category* | Citation of document, with indication, where appropriate, of the relevant passages | Relevant to claim No. |
|---|---|---|
| X<br>Y | JP 2016-160343 A (FUJIFILM CORPORATION) 05 September 2016, claim 1, paragraphs [0049]-[0062] & WO 2016/139981 A1 | 1-8<br>1-8 |
| Y | JP 2015-155490 A (NITTO DENKO CORPORATION) 27 August 2015, claim 1, paragraph [0093] (Family: none) | 1-8 |
| A | JP 62-91577 A (NIPPON FOIL MFG. CO., LTD.) 27 April 1987, claim 1 (Family: none) | 1-8 |
| P, A | JP 2018-90793 A (NITTO DENKO CORPORATION) 14 June 2018, entire text & WO 2018/101371 A1 | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000273418 A
- JP 2018102824 A
- JP 2019098482 A